(19) Europäisches Patentamt
European Patent Office
Office européen des brevets

(11) Veröffentlichungsnummer : **0 037 375**
**B1**

(12) # EUROPÄISCHE PATENTSCHRIFT

(45) Veröffentlichungstag der Patentschrift : **23.05.84**

(51) Int. Cl.³ : **A 01 N 25/18**

(21) Anmeldenummer : **81810101.6**

(22) Anmeldetag : **16.03.81**

(54) **Vorrichtung zur Abgabe von Insektiziddämpfen.**

(30) Priorität : **21.03.80 LU 82279**
**20.10.80 LU 82867**

(43) Veröffentlichungstag der Anmeldung :
**07.10.81 Patentblatt 81/40**

(45) Bekanntmachung des Hinweises auf die Patenterteilung : **23.05.84 Patentblatt 84/21**

(84) Benannte Vertragsstaaten :
**AT BE CH DE FR IT LI LU**

(56) Entgegenhaltungen :
**FR-A- 1 197 301**
**FR-A- 1 596 401**
**FR-A- 1 602 397**
**FR-A- 2 292 430**
**FR-A- 2 322 546**
**FR-A- 2 378 448**
**GB-A- 1 288 138**

**Die Akte enthält technische Angaben, die nach dem Eingang der Anmeldung eingereicht wurden und die nicht in dieser Patentschrift enthalten sind.**

(73) Patentinhaber : **Airwick AG**
**Postfach**
**CH-4002 Basel (CH)**

(72) Erfinder : **Hennart, Claude**
**Le Clos Baron**
**F-95000 Seraincourt (FR)**
Erfinder : **Courdent, Jacques**
**Le Bourg**
**F-86470 Lavausseau (FR)**

(74) Vertreter : **Schirner, Rolf et al**
**Patentabteilung der CIBA-GEIGY AG Postfach**
**CH-4002 Basel (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Vorliegende Erfindung betrifft in oder auf einem Heizapparat, verwendbare Zusammensetzungen, die zur Abgabe von Insektiziddämpfen bestimmt sind.

Es ist bekannt, zur Verdampfung von Insektizidstoffen in die Atmosphäre Hitze anzuwenden, entweder durch Verbrennung eines Kohlenwasserstoffgases (britisches Patent 1 366 041) oder mittels einer elektrischen Birne (französische Patente 921 852 und 986 269) oder mittels eines speziell für diese Anwendung bekannten elektrischen Apparats (britische Patente 1 379 782, 1 429 032 und 2 003 034, spanisches Patent 245 083, französische Patente 1 092 141, 1 165 348 und 2 054 435 und italienisches Patent 713 459).

Bei den für diese Anwendung geeigneten Systemen setzt man feste Zusammensetzungen ein, die eine oder mehrere Wirkstoffe in einer saugfähigen Grundmasse imprägniert enthalten ; solche Zusammensetzungen sind in den oben genannten Patenten sowie verschiedenen anderen (französisches Patent 2 201 832 ; japanische Anmeldungen 54/092 620, 73/77 020, 74/66 823 und 76/133 426) beschrieben.

Im allgemeinen enthalten diese Zusammensetzungen nur einen Wirkstoff. Es ist nun häufig zweckmässig, die Aktivität mehrerer Wirkstoffe zu kombinieren, da sie ihre Wirkung gegenseitig verstärken oder verschiedene Wirkungen haben können und damit ein breiteres Wirkungsspektrum aufweisen können, wie beispielsweise aus dem U.S. Patent 3 934 023 oder der japanischen Patentanmeldung 77/039 890 ersichtlich ist. Die Kombination von zwei oder mehreren Wirkstoffen liegt dabei in naheliegender Weise gemischt in einer Zusammensetzung vor. Bei der natürlichen Verdunstung von unterschiedlichen Pestiziden ist es aus den französischen Patenten 1 596 401 und 1 602 397 bereits bekannt, diese in verschiedenen, von einander getrennten saugfähigen Massen absorbiert zu verwenden. Gemäss französischem Patent 1 197 301 sind pyrogene Vorrichtungen bekannt, welche verschiedene Schichten mit unterschiedlichen Pestiziden, darunter Pyrethrum, aufweisen wobei die Wirkstoffe durch Selbstverbrennung der Vorrichtung freigesetzt werden.

Es wurde nun gefunden, dass die Wirksamkeit bestimmter Wirkstoffkombinationen ausserordentlich hoch ist, wenn diese Wirkstoffe getrennt und nebeneinander in den saugfähigen Massen verteilt sind und durch Einwirkung von Hitze verdampft werden.

Gegenstand der Erfindung ist demnach eine Vorrichtung zur Abgabe von Insektiziddämpfen zur Verwendung in oder auf einem Heizapparat, welche aus mehreren nebeneinander angeordneten festen Zusammensetzungen besteht, von denen mindestens zwei ein unterschiedliches Insektizid enthalten, das in einer saugfähigen Grundmasse absorbiert ist, und dadurch gekennzeichnet ist, dass man als Insektizide Pyrethrinoide oder Isopyrethrinoide verwendet.

Gegebenenfalls können eine oder mehrere dieser Zusammensetzungen ausserdem einen inerten Hilfsstoff enthalten, den man unter Streckmitteln, Verdickungsmitteln, Parfums, Farbstoffen, Stabilisatoren und Insekten anlockenden oder vertreibenden Stoffen auswählt.

Die als Wirkstoff verwendbaren Pyrethrinoide umfassen insbesondere die aus einer Cyclopropancarbonsäure wie 2,2,3,3-Tetramethylcyclopropancarbonsäure, Chrysanthemumsäure oder 3-(2,2-Butano- oder 2,2-Dibrom- oder 2,2-Dichlor- oder 2,2-Difluor-vinyl)-2,2-dimethylcyclopropancarbonsäure in ihrer racemischen oder aufgespaltenen Form (d und/oder 1, cis und/oder trans) und den aus folgenden Alkoholen gebildeten Estern : 3-Aethyl-2-methyl-4-oxocyclopent-2-enol, 3-Allyl-2-methyl-4-oxocyclopent-2-enol, 3-Methallyl-2-methyl-4-oxocyclopent-2-enol, 3-Crotyl-2-methyl-4-oxocyclopent-2-enol, 3-(3-Methylprop-2-enyl)-2-methyl-4-oxocyclopent-2-enol, 3-(2-Chlorallyl)-2-methyl-4-oxocyclopent-2-enol, 3-(3-Chlorallyl)-2-methyl-4-oxocyclopent-2-enol, 3-Furfuryl-2-methyl-4-oxocyclopent-2-enol, 1-Phenyl-prop-2-inol, 1-(3-Chlorphenyl)-prop-2-inol, 1-(3-Fluorphenyl)-prop-2-inol, 1-(3-Trifluormethylphenyl)-prop-2-inol, 1-(2-Thienyl)-prop-2-inol, 1-(2-Furyl)-prop-2-inol, 4-Phenyl-but-2-enol, 4-(3-Methylphenyl)-but-2-enol, 4-(2-Methyl-phenyl)-but-2-enol, 4-(2,3-Dimethylphenyl)-but-2-enol, 4-(2-Methoxyphenyl)-but-2-enol, 4-(2-Chlorphenyl)-but-2-enol, 4-(3-Chlorphenyl)-but-2-enol, 4-(2,3-Dichlorphenyl)-but-2-enol, 4-(3-Bromphenyl)-but-2-enol, 4-Phenylbut-2-inol, 4-(2-Furyl)-but-2-inol, 4-(2-Thienyl)-but-2-inol, 5-Methylhex-5-en-2-inol, 5-Methylhexa-2,5-dienol, 5,6-Dimethylhept-5-en-2-inol, 2-Methylbenzylalkohol, 3-Methylbenzylalkohol, 4-Methylbenzylalkohol, 2,3-Dimethylbenzylalkohol, 2-4-Dimethylbenzylalkohol, 2,5-Dimethylbenzylalkohol, 2,6-Dimethylbenzylalkohol, 3,4-Dimethylbenzylalkohol, 3,5-Dimethylbenzylalkohol, 2,4,6-Trimethylbenzylalkohol, 4-Allylbenzylalkohol, 4-Allyl-2,6-dimethylbenzylalkohol, 4-Methallylbenzylalkohol, 4-(But-3-enyl)-benzylalkohol, 4-Vinylbenzylalkohol, 4-Cyanbenzylalkohol, 4-Trifluormethylbenzylalkohol, 4-Nitrobenzylalkohol, 3-Methylfurfurylalkohol, 5-Methylfurfurylalkohol, 3,5-Dimethylfurfurylalkohol, 4,5-Dimethylfurfurylalkohol, 5-Allylfurfurylalkohol, 5-Propargylfurfurylalkohol, (2-Methyl-3-furyl)-methylalkohol, (2,5-Dimethyl-3-furyl)-methylalkohol, (2,4,5-Trimethyl-3-furyl)-methylalkohol, (5-Allyl-3-furyl)-methylalkohol, (5-Allyl-2-methyl-3-furyl)-methylalkohol, (2-Methyl-5-propargyl-3-furyl)-methylalkohol, Tetrahydrophthalimidomethanol, (5-Benzyl-3-furyl)-methanol, (5-α-Cyanbenzyl-3-furyl)-methanol, (5-α-Aethinylbenzyl-3-furyl)-methanol, 3-Phenoxy-α-cyanbenzylalkohol und 3-Phenoxy-α-äthinylbenzylalkohol.

Diese Ester umfassen insbesondere die unter den Namen Allethrin, Bioallethrin, S-Bioallethrin, Cinerin, Furethrin, Dimethrin, Benathrin, Kadethrin, Prothrin (oder Furamethrin), Proparthrin, Tetramethrin, Resmethrin, Bioresmethrin, Phenothrin, d-Phenothrin, Permethrin, Biopermethrin, Cypermethrin, Bromethrin, Decamethrin und Fluorethrin bekannten Substanzen.

Als Wirkstoff geeignete Isopyrethrinoide bestehen aus den Estern, die sich aus den oben genannten Alkoholen und den durch die Formel

$$A - \underset{R'}{\overset{R}{C}} - CO - OH$$

worin R für einen Niederalkyl-, Niederalkenyl- oder Cyclopropylrest und R' für ein Wasserstoffatom stehen oder auch R und R' zusammen einen zweiwertigen 1,3-Propanorest bedeuten und A einen gegebenenfalls durch Brom, Chlor, Fluor oder Alkyl- oder Alkoxyreste mit 1 bis 4 Kohlenstoffatomen einfach oder zweifach substituierten, unter Benzol, Furan, Pyrrol und Thiophen ausgewählten aromatischen Kern oder auch einen Naphthylrest, 3,3-Dibrom-2-propenyl- oder 3,3-Dichlor-2-propenylrest oder einen Alkylrest mit 1 bis 10 Kohlenstoffatomen darstellt, definierten Säuren in ihrer racemischen oder optisch aktiven Form bilden.

Unter den so definierten Säuren seien insbesondere die folgenden genannt : 2-Phenylisovaleriansäure, 2-Phenylisocapronsäure, 2-Cyclopropyl-2-phenylessigsäure, 2-(4-Chlorphenyl)-propionsäure, 2-(4-Chlorphenyl)-buttersäure, 2-(4-Chlorphenyl)-isovaleriansäure, 2-(4-Chlorphenyl)-isocapronsäure, 2-(4-Chlorphenyl)-buttersäure, 2-(4-Chlorphenyl)-isovaleriansäure, 2-(4-Chlorphenyl)-isocapronsäure, 2-(4-Chlorphenyl)-3,3-dimethylbuttersäure, 2-(4-Chlorphenyl)-buten-(3)-säure, 2-(4-Chlorphenyl)-penten-(4)-säure, 2-Cyclopropyl-2-(4-chlorphenyl)-essigsäure, 1-Phenylcyclobutancarbonsäure, 1-(4-Chlorphenyl)-cyclobutancarbonsäure, 2-(4-Fluorphenyl)-isovaleriansäure, 2-(4-Bromphenyl)-isovaleriansäure, 2-(2,4-Dichlorphenyl)-isovaleriansäure, 2-(4-Methylphenyl)-isovaleriansäure, 2-(4-Methoxyphenyl)-isovaleriansäure, 2-(4-Chlor-2-methylphenyl)-isovaleriansäure, 2-(2-Furyl)-isovaleriansäure, 2-(2-Thienyl)-isovaleriansäure, 2-Cyclopropyl-2-(2-furyl)-essigsäure, 2-Cyclopropyl-2-(2-thienyl)-essigsäure, 2-(2-Naphtyl)-isovaleriansäure, 2-Cyclopropyl-2-(2-naphthyl)-essigsäure, 5,5-Dichlor-2-isopropylpenten-(4)-säure, 5,5-Dibrom-2-isopropylpenten-(4)-säure, 5,5-Dichlor-2-cyclopropylpenten-(4)-säure, 5,5-Dibrom-2-cyclopropylpenten-(4)-säure, 5,5-Dichlor-2-tertiär-butylpenten-(4)-säure, 2-(1-Pyrrolyl)-isovaleriansäure, 2-Isopropylisovaleriansäure, 2-Isopropyl-n-valeriansäure, 2-Isopropylhexansäure, 2-Isopropyloctansäure, 2-Isopropyldecansäure, 2-Isopropyldodecansäure, 2-Aethyl-n-valeriansäure, 2-Aethyloctansäure, 2-Aethyldecansäure und 2,2-Diäthyldecansäure.

Solche Säuren und deren Ester sind insbesondere in den deutschen Patenten 2 727 323, 2 750 169, 2 753 605, 2 810 031 und 2 925 337, dem amerikanischen Patent 4 164 415, den belgischen Patenten 853 411, 855 518, 857 248, 857 859, 860 687 und 862 133, im britischen Patent 1 514 557, in den europäischen Patenten 6 630, 7 421 und 9 637, in den französischen Patenten 2 359 813, 2 372 799 und 2 376 118 sowie in den japanischen Patentanmeldungen 52/153 951, 53/059 646, 53/108 954, 54/144 332, 55/009 049 und 55/028 942 beschrieben.

Die so gebildeten Isopyrethrinoide schliessen insbesondere die unter den Namen Fenpropanat und Fenvalerat bekannten Substanzen ein.

Die Insektenlockstoffe, falls mindestens einer davon in einer der Zusammensetzungen vorliegt, wählt man unter allen solchen aus, die dem Fachmann bekannt sind, wie z. B. Fruchtaromen, Karamel, Käse- und Fleischaromen, Aminosäuren, Pollenextrakte, Thymol, Skatol, Indol, Eugenol, Paraformaldehyd, Hexamethylentetramin, Ammoniumcarbamat, aliphatische Amine, Papain, Pankreatin, aliphatische Säuren, Vanillin, 3-Chlor-3-methylbuten-1,1-Chlor-3-methylbuten-2 und höhere Alkene mit 20 bis 27 Kohlenstoffatomen wie (cis)-Trikosen-9.

Die Insekten vertreibenden Stoffe, falls mindestens einer davon in einer der Zusammensetzungen vorliegt, sind beispielsweise Bernsteinsäure-, Maleinsäure- und Fumarsäuredialkylester, Mandelsäurealkylester, N,N-Dialkylbenzamide und -toluamide, Cyclopropancarbonamide, 1-Alkanoyl[a]hexahydrobenzofurane, Alkansäure-3,6-dioxadecylester, Citronellal und dessen Dialkylacetale sowie Alkylhexandiole.

Die Streckmittel, falls mindestens eines davon in einer der Zusammensetzungen vorliegt, wählt man unter flüssigen oder festen organischen Verbindungen aus, die gegenüber der Insektizidverbindung ein Lösungsvermögen besitzen. Die eingesetzten Streckmittel weisen vorzugsweise einen Dampfdruck auf, der mindestens dem des begleitenden Wirkstoffs gleich ist ; besonders bevorzugt ist dieser Dampfdruck höher als derjenige des Wirkstoffs.

Unter geeigneten Streckmitteln seien insbesondere solche genannt, die man aus den folgenden chemischen Klassen auswählt :

1) aus Alkanolen und Kohlenwasserstoffmonocarbonsäuren gebildete Monoester wie beispielsweise Alkylacetate mit Hexadecyl oder Octadecyl als Alkyl, Alkylbutyrate und -isobutyrate mit Dodecyl, Tetradecyl, Hexadecyl oder Octadecyl als Alkyl, Alkylhexanoate, Alkyloctanoate, Alkyldecanoate, Alkyllaurate, -undecanoate, -undecenoate und -myristate mit Hexyl, Octyl, Decyl oder Dodecyl als Alkyl, Alkylpalmitate, -oleate und -stearate mit Propyl, Butyl, Isobutyl, Amyl, Hexyl oder Octyl als Alkyl sowie Alkylbenzoate, -phenylacetate und -phenylpropionate mit Hexyl, Octyl, Decyl oder Dodecyl als Alkyl ;

2) aus Alkanolen und Kohlenwasserstoffdicarbonsäuren gebildete Ester, wie beispielsweise Dialkyladipate wie Dioctyl-, Dinonyl-, Didecyl- und Didodecyladipat, Dialkylsebacinate wie Dibutyl-, Dipentyl-,

Dioctyl- und Didecylsebacinat, Dialkylazelainate wie Dioctyl- und Didecylazelainat, Dialkylphthalate wie Dibutyl-, Dioctyl-, Didecyl-, Bis-(undecyl)-, Bis-(dodecyl)-, Bis-(tridecyl)-, Bis-(tetradecyl)- und Dicetylphthalat ;

3) aus gegebenenfalls alkylsubstituierten Phenolen und Kohlenwasserstoffdicarbonsäuren gebildete Diester wie beispielsweise Diarylphthalate wie Diphenylphthalat und Dikresylphthalate ;

4) aus gegebenenfalls alkylsubstituierten Cycloalkanolen und Kohlenwasserstoffdicarbonsäuren gebildete Diester wie beispielsweise Dicyclohexylphthalat, Bis-(methylcyclohexyl)-phthalate, Bis-(trimethylcyclohexyl)-phthalate und Bis-(tetramethylcyclohexyl)-phthalate ;

5) aus Phenylalkanolen und Kohlenwasserstoffdicarbonsäuren gebildete Diester wie beispielsweise Dibenzylsebacinat, Dibenzylazelainat und Bis-(phenylpropyl)-sebacinate ;

6) aus Alkandiolen und Kohlenwasserstoffmonocarbonsäuren gebildete Diester wie beispielsweise 2,2,4-Trimethylpentan-1,3-diol-diisobutyrat ;

7) aus gegebenenfalls alkylsubstituierten Phenolen und Phosphorsäure gebildete Triester wie beispielsweise Triphenylphosphat, Tris-(4-tert.-butylphenyl)-phosphat und Trikresylphosphate ;

8) aus Alkanolen und Phosphorsäure gebildete Triester wie beispielsweise Trioctylphosphat, Tridecylphosphat und Tridodecylphosphat ;

9) Polyalkylenglykole wie beispielsweise Polyäthylenglykole und Polypropylenglykole ;

10) Fettalkohole wie beispielsweise Hexadecanol, Octadecanol und Octadecen-(9)-ol ;

11) Fettsäuren wie beispielsweise Laurin-, Myristin-, Palmitin-, Stearin- und Oelsäure ;

12) Alkane mit mindestens 18 Kohlenstoffatomen wie beispielsweise Octadecan, Eikosan, Dokosan und Tetrakosan sowie deren unter den Namen Vaselineöl, Paraffinöl, Schweröl, Gasöl, Heizöl, Strassenöl, Ventilöl, Rückstandsöl, Vaseline, Petroleum, Gatsch, Paraffin, Mikrowachs, Ozokerit und Ceresin bekannten Gemische ;

13) Alkanone mit mindestens 18 Kohlenstoffatomen wie beispielsweise Caprinon, Lauron, Myriston, Palmiton und Stearon ; und

14) Alkenone mit mindestens 18 Kohlenstoffatomen wie beispielsweise Heneikosa-1,20-dien-11-on und Oleon.

Die Verdickungsmittel sind zum Beispiel Metallsalze von Fettsäuren wie Aluminium- oder Magnesium-mono-, -di- und -tristearat oder Fettsäureaminsalze wie Hexadecylaminopropylenamin-, Octadecylaminopropylenamin- oder Octadecenylaminopropylenamindioleat oder modifizierte Montmorillonite wie die Ammoniumsalze von Dimethyldi-(höheralkyl)-bentonit.

Die Stabilisatoren, falls mindestens einer davon in einer der Zusammensetzungen vorliegt, wählt man unter solchen aus, die dem Fachmann bekannt sind, zum Beispiel Phenolverbindungen wie Resorcin, Pyrogallol, Hydrochinon, 2-tert.-Butyl-4-methoxyphenol und 2,6-Di-tert.-butyl-4-methylphenol. Bis-phenolverbindungen wie Bis-(hydroxyphenyl)-äthane, Bis-(hydroxyphenyl)-methane, Bis-(hydroxyphenyl)-propane, Bis-(3-tert.-butyl-5-äthyl-2-hydroxyphenyl)-methan und Bis-(3-tert.butyl-4-hydroxyphenyl)-methan sowie O,O-Dialkyl-hydroxybenzylphosphonate wie O,O-Diäthyl-4-hydroxy-3,5-di-tert.-butylbenzylphosphonat.

Die saugfähigen Grundmassen kann man unter cellulosehaltigen Papieren und Pappen, die aus Holzfasern, Getreidefasern, Espartofasern, Baumwollfasern oder Altpapierresten bestehen, Asbestfasern, Glasfasern, Wollfasern und/oder Polymerfasern sowie unter Steingut, gefrittetem Aluminium und unglasiertem Porzellan auswählen.

Der die Grundmasse darstellende Stoff kann ferner unter organischen Pulvern, Mineralpulvern, Pigmenten, Farbstoffen und Bindemitteln ausgewählte Füllstoffe enthalten. Die Grundmassen können in jeglichen bekannten Formen wie als Platten und Blöcke vorliegen.

Die Platten können eine runde, ovale, quadratische, rechteckige, dreieckige oder irgend eine vieleckige Gestalt haben, ihre Gesamtoberfläche kann sich entweder nur auf wenige Quadratcentimeter oder mehrere Quadratdecimeter belaufen und ihre Dicke kann von 0,1-6 mm variieren.

Die Blöcke können kubisch, prismatisch oder zylinderförmig sein oder einen elliptischen Querschnitt oder irgend eine polyedrische Gestalt aufweisen, und ihre Gesamtoberfläche kann von nur wenigen Quadratcentimetern bis zu mehreren Quadratdecimetern variieren.

Eine erfindungsgemässe feste Zusammensetzung erhält man durch Imprägnieren der saugfähigen Grundmasse mit dem flüssigen Gemisch der übrigen Bestandteile der Zusammensetzung (Wirkstoff und gegebenenfalls Hilfsstoffe). Das Imprägnieren kann dadurch erfolgen, dass man das flüssige Gemisch auf die saugfähige Masse giesst oder diese in die Flüssigkeit eintaucht, wobei man letztere gegebenenfalls nach dem Eintauchen ablaufen lässt ; dieser Vorgang lässt sich beispielsweise durch Verwendung einer Dosierpumpe oder einer Reihe von Spritzköpfen mit konstantem Ausfluss mechanisieren ; ferner kann man Quetschwalzen mit einstellbarem Druck einsetzen, um Rückhaltung des gewünschten Flüssigkeitsanteils zu ermöglichen ; ebenfalls lässt sich eine Zentrifuge mit einstellbarer Geschwindigkeit für dieselben Zwecke verwenden. Ein technisch interessantes Imprägnierverfahren besteht zum Beispiel in der Verwendung von langen, kontinuierlich imprägnierten und dann auf die gewünschten Abmessungen zugeschnittenen Bändern. Das Imprägnieren lässt sich auch so durchführen, dass man die saugfähige Masse in Gegenwart des flüssigen Gemischs unter Vakuum setzt.

Ferner lässt sich das Imprägnieren automatisch mittels einer Maschine durchführen, die eine oder mehrere Injektionsspritzen und ein Transportband umfasst, welches die zu imprägnierenden saugfähigen

Massen unter den Spritzen hindurchlaufen lässt. Auch kann man eine Lösung des flüssigen Gemischs in einem flüchtigen Lösungsmittel verwenden, das anschliessend abgedampft wird.

Vorzugsweise liegen zwei oder drei feste, die Vorrichtung aufbauende Zusammensetzungen vor. Sie können einfach ohne konkrete Verbindungsmittel nebeneinander liegen oder auch andererseits eine Aufbaueinheit darstellen.

Ist die Vorrichtung eine Aufbaueinheit, so können die festen Zusammensetzungen durch irgendein bekanntes Mittel wie einen Klebstoff, einen Kitt oder ein Klemm-, Stift-, Einfassungs- oder Falzsystem aus Metall oder Kunststoff miteinander verbunden sein.

Die Vorrichtung kann auch aus einer einzigen saugfähigen Grundmasse bestehen, in der die gewählten Wirkstoffe, gegebenenfalls zusammen mit einem inerten Hilfsstoff, getrennt jeweils in einem anderen Bereich absorbiert sind. Dabei kann man eine Zone der Grundmasse unimprägniert lassen, um eine Trennung zwischen den Wirkstoffen zu ergeben ; ferner kann man in diesem Bereich mittels Vorimprägnieren mit einer Substanz, die dazu bestimmt ist, die Saugfähigkeit der herkömmlichen Masse aufzuheben, eine undurchdringbare Sperre schaffen.

So kann eine Sperre beispielsweise mittels einem in flüssigem Zustand an der Stelle, wo die Sperre errichtet werden soll, abgeschiedenen pflanzlichen, tierischen oder Paraffinwachsgebildet werden ; das Wachs wird in flüssiger Form absorbiert und bildet nach Abkühlen eine Trennung, welche die Wirkstoffe nicht druchdringen können.

Eine weitere, zur Errichtung einer Sperre verwendbare Substanz besteht beispielsweise aus einem Alkalisilikat in wässriger Lösung, die danach eingeengt und getrocknet wird.

Ebenfalls kann man eine Lösung eines natürlichen oder synthetischen Harzes in einem flüchtigen Lösungsmittel verwenden, welches dann durch Trocknen entfernt wird.

Ein besonders vorteilhaftes Verfahren besteht darin, dass man die Sperre an Ort und Stelle unter Verwendung einer unter Monomeren, Präpolymeren und Gemischen von Verbindungen, die miteinander zu Polymerharzen reagieren können, ausgewählten polymerisierbaren Substanz erzeugt.

Als in Betracht kommende Monomere seien dabei insbesondere Styrol, Methylacrylat, Aethylacrylat, Dimethyl-, Diäthyl-, Dipropyl- und Dibutylmaleinat sowie Cyanacrylsäureester genannt.

Die Präpolymeren wählt man beispielsweise unter Polyestern aus, wie sie zwischen Dicarbonsäuren wie Adipin-, Sebacin-, Azelain-, Malein-, Phthal- oder Tetrahydrophthalsäure und Polyolen wie Aethylen- und Propylenglykol, Polyäthylen- und Polypropylenglykolen, Glycerin und Pentaerythrit gebildet werden.

Bei Verwendung eines Monomeren oder Präpolymeren kann man zweckmässig im Augenblick der Behandlung der saugfähigen Grundmasse einen Beschleuniger und/oder einen Polymerisationskatalysator zusetzen oder vorzugsweise diesen Beschleuniger und/oder Katalysator getrennt vor, während oder nach der Behandlung auf die Behandlungszone aufbringen.

Als Beschleuniger seien insbesondere Kobalt- oder Vanadiumsalze und Dialkylaniline genannt ; als Polymerisationskatalysatorn kommen insbesondere Percarbonsäuren, deren Ester und deren Salze sowie Acylperoxyde, Alkylperoxyde, Cumolperoxyd oder Ketonperoxyde in Frage.

Zur Förderung der Polymerisation kann man diese auch bei einer gegenüber Raumtemperatur erhöhten Temperatur, wie beispielsweise zwischen 40 und 80 °C, während der Behandlung durchführen oder die behandelte Zone nach der Behandlung dieser Temperatur aussetzen. Ferner kann man die behandelte Zone einer Infrarotbestrahlung, Ultraviolettbestrahlung, Ultraschall, Mikrowellen oder Gammastrahlen aussetzen.

Natürlich kann man Kombinationen von mehreren Präpolymeren oder einem oder mehreren Präpolymeren und Monomeren einsetzen, um den gebildeten Polymeren spezielle Eigenschaften zu verleihen.

Als Gemische von miteinander reaktionsfähigen Verbindungen seien insbesondere solche genannt, die zur Bildung von Harzen vom Epoxi-, Epoxi-ester- und Epoxiphenoltyp, zur Bildung von Aminoharzen wie Harnstoff/Formaldehyd- oder Melamin/Formaldehydharzen bzw. zur Bildung von Polyurethanharzen führen.

Die Vermischung dieser Verbindungen kann unmittelbar vor dem Aufbringen auf die saugfähige Grundmasse erfolgen ; auch kann man die Verbindungen jeweils gleichzeitig oder nacheinander so auf dieser Masse abscheiden, dass die Vermischung an Ort und Stelle vor sich gehen kann.

Die erfindungsgemässen Vorrichtungen bieten den Vorteil, dass sie bei gleichen Substanzmengen und unter den gleichen Heizbedingungen wirksamere Insektiziddämpfe liefern als solche, wie sie von bekannten Vorrichtungen abgegeben werden, worin die verwendeten Wirkstoffe zu einer einzigen Zusammensetzung vermischt werden.

Ein besonderes Merkmal der erfindungsgemässen Vorrichtungen besteht darin, dass man für jede der festen Zusammensetzungen eine auf den vorhandenen Wirkstoff bezogene Verdampfungsfläche wählen und somit getrennt die verdampfte Menge der jeweiligen Wirkstoffe steuern kann.

Gemäss einem weiteren besonderen Merkmal der erfindungsgemässen Vorrichtungen kann man unter Verwendung eines geeigneten Heizapparats die festen Zusammensetzungen jeweils auf eine unterschiedliche, auf den vorhandenen Wirkstoff bezogene Temperatur erhitzen und somit hier ebenfalls die Menge der jeweiligen Wirkstoffe getrennt steuern.

Die Vorzüge der erfindungsgemässen Vorrichtungen werden durch die nachfolgenden Versuche erläutert.

Versuch 1

Unter Verwendung derselben saugfähigen Grundmasse stellt man zwei Vorrichtungen 1-A und 1-B mit der gleichen Gesamtoberfläche her. Die Vorrichtung 1-A besteht aus zwei verschiedenen, nebeneinander liegenden und mittels Metallklammern verbundenen Zusammensetzungen 1-A' und 1-A" ; die Vorrichtung 1-B besteht aus einer einzigen homogenen Zusammensetzung, die sämtliche Bestandteile der Zusammensetzungen 1-A' und 1-A" enthält. Diese Vorrichtungen sind unten im einzelnen beschrieben ;

| | 1-A | | 1-B |
|---|---|---|---|
| | 1-A' | 1-A" | |
| Allethrin | 50 mg | - | 50 mg |
| Tetramethrin | - | 50 mg | 50 mg |
| Dioctylsebacinat | 75 mg | - | 75 mg |
| Stabilisator (a) | - | 20 mg | 20 mg |
| Cellulose | 880 mg | 1 760 mg | 2 640 mg |
| Oberfläche | 714 $mm^2$ | 1 428 $mm^2$ | 2 142 $mm^2$ |
| Länge | 34 mm | 42 mm | 63 mm |
| Breite | 21 mm | 34 mm | 34 mm |
| Dicke | 3 mm | 3 mm | 3 mm |

(a) O,O-Diäthyl-(4-hydroxy-3,5-di-tert.-butylbenzyl)-phosphonat.

Die so hergestellten Vorrichtungen stellt man jeweils auf den entsprechenden Teil eines elektrischen Apparats mit einer Heizfläche von 35 × 64 mm, der mit 225 Volt Wechselstrom gespeist wird, um eine Temperatur von 200 °C zu erreichen.

Die so mit ihrer Vorrichtung versehenen Apparate stellt man je in ein bei 25 °C gehaltenes, 28 $m^3$ grosses Zimmer und lässt 100 Hausfliegen darin frei.

Nach 45 Minuten zählt man in jedem Zimmer die Anzahl toter Fliegen oder solcher in dorsalem Dekubitus.

Diese Zählungen geben folgendes Resultat :

1-A : 65
1-B : 43

Versuch 2

Zur Herstellung der Vorrichtungen 2-A und 2-B verfährt man wie in Versuch 1 ; die Vorrichtung 2-A besteht aus zwei verschiedenen Zusammensetzungen 2-A' und 2-A", die man durch Imprägnieren jedes der beiden Teile einer Zellstoffpappe erhält, wobei diese Teile durch eine imprägnierte Linie eines mit Peroxyd katalysierten Polyesterpräpolymeren getrennt sind ; die Vorrichtung 2-B besteht aus einer einzigen homogenen Zusammensetzung, die sämtliche Bestandteile der Zusammensetzung 2-A' und 2-A" enthält. Diese Vorrichtungen sind unten im einzelnen beschrieben :

| | 2-A | | 2-B |
|---|---|---|---|
| | 2-A' | 2-A" | |
| Bioallethrin | 40 mg | - | 40 mg |
| d-Phenothrin | - | 60 mg | 60 mg |
| Butylstearat | 40 mg | - | 40 mg |
| Cellulose | 880 mg | 1 760 mg | 2 640 mg |
| Oberfläche | 646 $mm^2$ | 1 394 $mm^2$ | 2 040 $mm^2$ |
| Länge | 34 mm | 41 mm | 60 mm |
| Breite | 19 mm | 34 mm | 34 mm |
| Dicke | 3 mm | 3 mm | 3 mm |

Die so hergestellten Vorrichtungen stellt man jeweils auf den entsprechenden Teil eines elektrischen Apparats mit einer Heizfläche von 35 × 64 mm, der mit 225 Volt Wechselstrom gespeist wird, um eine Temperatur von 160 °C zu erreichen.

Die so mit ihrer Vorrichtung versehenen Apparate stellt man je in ein bei 25 °C gehaltenes, 28 $m^3$ grosses Zimmer und lässt 100 Hausfliegen darin frei.

Nach 30 Minuten zählt man in jedem Zimmer die Anzahl toter Fliegen oder solcher in dorsalem Dekubitus. Das Ergebnis der Zählungen ist wie folgt :

2-A : 38
2-B : 21

Die Ergebnisse dieser Versuche zeigen, dass die insektizide Wirksamkeit einer Vorrichtung, in denen die Zusammensetzungen getrennt sind, derjenigen einer bekannten Vorrichtung, die dieselben Bestandteile in gleichen Mengen, aber in einer einzigen Zusammensetzung, enthält, überlegen ist.

Versuch 3

Unter Verwendung derselben saugfähigen Grundmasse stellt man zwei Vorrichtungen 3-A und 3-B mit der gleichen Gesamtoberfläche her. Die Vorrichtung 3-A besteht aus zwei verschiedenen Zusammensetzungen 3-A' und 3-A", die man durch Imprägnieren jedes der beiden Teile einer Zellstoffpappe erhält, wobei diese Teile durch eine aus einem Copolymer von Styrol/Propylenglykolmaleinat-phthalat bestehende imprägnierte Linie getrennt sind ; die Vorrichtung 3-B besteht aus einer einzigen homogenen Zusammensetzung, die sämtliche Bestandteile der Zusammensetzungen 3-A' und 3-A" enthält. Diese Vorrichtungen sind unten im einzelnen beschrieben :

| | 3-A | | 3-B |
|---|---|---|---|
| | 3-A' | 3-A" | |
| d-Allethrin | - | 30 mg | 30 mg |
| d-Phenothrin | 10 mg | - | 10 mg |
| Isobutylstearat | - | 12,5 mg | 12,5 mg |
| Stabilisator (a) | 1 mg | 3 mg | 4 mg |
| Cellulose | 400 mg | 567 mg | 967 mg |
| Oberfläche | 720 $mm^2$ | 1 020 $mm^2$ | 1 740 $mm^2$ |
| Länge | 24 mm | 34 mm | 58 mm |
| Breite | 30 mm | 30 mm | 30 mm |
| Dicke | 1,25 mm | 1,25 mm | 1,25 mm |

Die so hergestellten Vorrichtungen stellt man jeweils auf den entsprechenden Teil eines elektrischen Apparats mit einer durch 225 Volt Wechselstrom geheizten Fläche von 30 × 60 mm, um eine Temperatur von 165 °C zu erreichen.

Die so mit ihrer Vorrichtung versehenen Apparate stellt man je in ein bei 25 °C gehaltenes, 28 $m^3$ grosses Zimmer und setzt sie einem kontinuierlichen Luftstrom von 500 $m^3$/Stunde aus.

Im Zeitraum vom Beginn des Versuchs bis nach Ablauf einer Stunde lässt man hundert Fliegen in jedes Zimmer frei und setzt danach alle Stunde weitere zehn Fliegen dazu.

Alle Viertelstunde während der ersten Stunde und danach alle Stunde zählt man die Anzahl toter Fliegen oder solcher in dorsalem Dekubitus in jedem Zimmer und ermittelt aus ihrer Zahl die Anzahl noch lebender und lästiger Fliegen.

Die Ergebnisse dieser Messungen sind unten in der Tabelle zusammengefasst.

(Siehe Tabelle, Seite 8 f.)

| abgelaufene Zeit | 3-A | 3-B |
|---|---|---|
| 15 Minuten | 95 | 97 |
| 30 Minuten | 73 | 86 |
| 45 Minuten | 48 | 72 |
| 1 Stunde | 31 | 59 |
| 2 Stunden | 23 | 56 |
| 3 Stunden | 19 | 62 |
| 4 Stunden | 16 | 69 |
| 5 Stunden | 23 | 76 |
| 6 Stunden | 27 | 83 |
| 7 Stunden | 35 | 89 |
| 8 Stunden | 41 | 95 |
| 9 Stunden | 47 | 102 |

Versuch 4

Man verfährt wie in Versuch 3, unter Verwendung der aus den unten angegebenen Zusammensetzungen bestehenden Vorrichtungen 4-A und 4-B, wobei man die Zimmer, in denen die Apparate aufgestellt sind, einem Luftstrom von 1 000 $m^3$/Stunde aussetzt.

| | 4-A | | 4-B |
|---|---|---|---|
| | 4-A' | 4-A" | |
| Tetramethrin | 30 mg | - | 30 mg |
| d-Phenothrin | - | 20 mg | 20 mg |
| Isobutylstearat | 30 mg | - | 30 mg |
| Stabilisator (a) | 3 mg | 2 mg | 5 mg |
| Cellulose | 480 mg | 480 mg | 960 mg |
| Oberfläche | 870 $mm^2$ | 870 $mm^2$ | 1 740 $mm^2$ |
| Länge | 29 mm | 29 mm | 58 mm |
| Breite | 30 mm | 30 mm | 30 mm |
| Dicke | 1,25 mm | 1,25 mm | 1,25 mm |

Die Ergebnisse der als Anzahl lebender Fliegen ausgedrückten Messungen sind unten in der Tabelle zusammengefasst :

| abgelaufene Zeit | 4-A | 4-B |
|---|---|---|
| 15 Minuten | 96 | 100 |
| 30 Minuten | 90 | 100 |
| 45 Minuten | 82 | 98 |
| 1 Stunde | 74 | 95 |
| 2 Stunden | 55 | 88 |
| 3 Stunden | 43 | 76 |
| 4 Stunden | 35 | 65 |
| 5 Stunden | 29 | 55 |

**Ansprüche**

1. Vorrichtung zur Abgabe von Insektiziddämpfen zur Verwendung in oder auf einem Heizapparat, welche aus mehreren nebeneinander angeordneten festen Zusammensetzungen besteht, von denen mindestens zwei ein unterschiedliches Insektizid enthalten, das in einer saugfähigen Grundmasse absorbiert ist, dadurch gekennzeichnet, dass man als Insektizide Pyrethrinoide oder Isopyrethrinoide verwendet.

2. Vorrichtung nach Anspruch 1, dadurch gekennzeichnet, dass sie aus zwei oder drei nebeneinander angeordneten festen Zusammensetzungen besteht.

3. Vorrichtung nach Anspruch 1, dadurch gekennzeichnet, dass mindestens eine der festen Zusammensetzungen als inerten Hilfsstoff ein Streck- oder Verdickungsmittel, ein Parfum oder einen Farbstoff, Stabilisator oder Insekten anlockenden oder vertreibenden Stoff enthält.

4. Vorrichtung nach Anspruch 1, dadurch gekennzeichnet, dass mindestens eine der festen Zusammensetzungen als Insektizid einen Ester der Chrysanthemumsäure, 3-(2,2-Butanovinyl)-2,2-dimethylcyclopropancarbonsäure, 3-(2,2-Dibromvinyl)-2,2-dimethylcyclopropancarbonsäure, 3-(2,2-Dichlorvinyl)-2,2-dimethylcyclopropancarbonsäure, 3-(2,2-Difluorvinyl)-2,2-dimethylcyclopropancarbonsäure oder 2,2,3,3-Tetramethylcyclopropancarbonsäure in ihrer racemischen oder aufgespaltenen Form enthält.

5. Vorrichtung nach Anspruch 1, dadurch gekennzeichnet, dass mindestens eine der festen Zusammensetzungen als Insektizid ein Isopyrethrinoid enthält, das aus einem für die Herstellung von Pyrethrinoiden verwendeten Alkohol und einer Säure in ihrer racemischen oder optisch aktiven Form gebildeten Ester besteht, wobei die Säure der Formel

$$A - \overset{\overset{R}{|}}{\underset{\underset{R'}{|}}{C}} - CO - OH$$

entspricht, worin R für einen Niederalkyl-, Niederalkenyl- oder Cyclopropylrest und R' für Wasserstoff stehen oder R und R' zusammen einen zweiwertigen 1,3-Propanorest bedeuten und A einen gegebenenfalls durch Brom, Chlor, Fluor oder Alkyl- oder Alkoxyreste mit 1 bis 4 Kohlenstoffatomen einfach oder zweifach substituierten, unter Benzol, Furan, Thiophen und Pyrrol ausgewählten aromatischen Kern oder auch einen Naphthylrest, 3,3-Dibrom-2-propenyl- oder 3,3-Dichlor-2-propenylrest oder einen Alkylrest mit 1 bis 10 Kohlenstoffatomen darstellt.

6. Vorrichtung nach Anspruch 1, dadurch gekennzeichnet, dass das Insektizid zu 2 bis 15 Gewichts-% in der Zusammensetzung enthalten ist.

7. Vorrichtung nach Anspruch 1, dadurch gekennzeichnet, dass als saugfähige Grundmasse cellulosehaltige Papiere oder Pappen, die aus Holzfasern, Getreidefasern, Espartofasern, Baumwollfasern oder Altpapierresten bestehen, Asbestfasern, Glasfasern, Wollfasern und/oder Polymerfasern sowie Steingut, gefrittetes Aluminium und unglasiertes Porzellan verwendet werden.

8. Vorrichtung nach Anspruch 1, dadurch gekennzeichnet, dass die saugfähige Grundmasse als 0,1 bis 6 Millimeter dicke platte vorliegt.

9. Vorrichtung nach Anspruch 1, dadurch gekennzeichnet, dass die festen Zusammensetzungen durch Klebstoff, Kitt oder Klemm-, Stift-, Einfassungs- oder Falzsystem aus Metall oder Kunststoff miteinander verbunden sind.

10. Vorrichtung nach Anspruch 1, dadurch gekennzeichnet, dass die Zusammensetzungen aus einer einzigen saugfähigen Grundmasse bestehen, in der die Wirkstoffe gegebenenfalls zusammen mit einem inerten Hilfsstoff jeweils auf verschiedenen voneinander getrennten Oberflächenteilen absorbiert sind.

11. Vorrichtung nach Anspruch 10, dadurch gekennzeichnet, dass die verschiedenen imprägnierten Oberflächenteile durch eine wirkstofffreie Zone getrennt sind.

12. Vorrichtung nach Anspruch 11, dadurch gekennzeichnet, dass die wirkstoffreie Zone mit einer Substanz imprägniert ist, welche die Saugfähigkeit der Grundmasse aufhebt.

13. Vorrichtung nach Anspruch 12, dadurch gekennzeichnet, dass die die Saugfähigkeit der Grundmasse aufhebende Substanz ein Wachs, Alkalisilikat, natürliches Harz oder Synthetisches Polymerharz ist.

**Claims**

1. Device for the release of insecticide vapours, for use in or on a heating apparatus, which device consists of several solid compositions arranged side-by-side, of which at least two contain a different insecticide which is absorbed in an absorptive base material, characterised in that the insecticides used are pyrethrinoids or isopyrethrinoids.

2. Device according to claim 1, characterised in that it consists of two or three solid compositions arranged side-by-side.

3. Device according to claim 1, characterised in that at least one of the solid compositions contains, as an inert auxiliary : an extender or thickener, a perfume or a dye, a stabiliser or a substance attracting or repelling insects.

4. Device according to claim 1, characterised in that at least one of the solid compositions contains as insecticide an ester selected from the group comprising the esters of chrysanthemic acid, 3-(2,2-butanovinyl)-2,2-dimethylcyclopropanecarboxylic acid, 3-(2,2-dibromovinyl)-2,2-dimethylcyclopropanecarboxylic acid 3-(2,2-dichlorovinyl)-2,2-dimethylcyclopropanecarboxylic acid 3-(2,2-difluorovinyl)-2,2-dimethylcyclopropanecarboxylic acid or 2,2,3,3-tetramethylcyclopropanecarboxylic acid, in its racemic or resolved form.

5. Device according to claim 1, characterised in that at least one of the solid compositions contains as insecticide an isopyrethrinoid consisting of an ester formed from an alcohol used for producing pyrethrinoids, and an acid, in its racemic or optically active form, the acid corresponding to the formula

$$\begin{array}{c} \phantom{A - }R \\ \phantom{A - }| \\ A - C - CO - OH \\ \phantom{A - }| \\ \phantom{A - }R' \end{array}$$

wherein R is a lower alkyl, lower alkenyl or cyclopropyl radical, and R′ is hydrogen, or R and R′ together are a divalent 1,3-propano radical, and A is an aromatic nucleus, chosen from the group comprising benzene, furan, thiophene and pyrrole, which is unsubstituted or mono- or disubstituted by bromine, chlorine, fluorine or alkyl or alkoxy radicals having 1 to 4 carbon atoms, or A is a naphthyl radical, or a 3,3-dibromo-2-propenyl or 3,3-dichloro-2-propenyl radical or an alkyl radical containing 1 to 10 carbon atoms.

6. Device according to claim 1, characterised in that the proportion of insecticide in the composition is 2 to 15 per cent by weight.

7. Device according to claim 1, characterised in that the absorptive base material used is chosen from the group comprising : cellulosic papers or cardboards composed of wood fibres, cereal fibres, esparto fibres, cotton fibres or waste paper ; or asbestos fibres, glass fibres, wool fibres and/or polymeric fibres, as well as earthenware, fritted aluminium and unglazed porcelain.

8. Device according to claim 1, characterised in that the absorptive base material is in the form of a plate having a thickness of 0.1 to 6 millimetres.

9. Device according to claim 1, characterised in that the solid compositions are joined to one another by means of an adhesive or cement, or by means of a clamping, pegging, welting or folding system composed of metal or plastics material.

10. Device according to claim 1, characterised in that the compositions consist of a single absorptive base material in which the active substances, if necessary together with an inert auxiliary, are absorbed in each case onto different surface parts separated from one another.

11. Device according to claim 10, characterised in that the various impregnated surface parts are separated by a zone free from active substances.

12. Device according to claim 11, characterised in that the zone free from active substance is impregnated with a substance which renders the base material non-absorptive.

13. Device according to claim 12, characterised in that the substance rendering the base material non-absorptive is chosen from the group comprising : wax, alkali silicate, natural resin or synthetic polymeric resin.

**Revendications**

1. Dispositif destiné à l'émission de vapeurs insecticides pour être utilisé dans, ou sur, un appareil chauffant, qui est constitué par plusieurs compositions solides disposées côte à côte, parmi lesquelles au moins deux contiennent un insecticide différent qui est absorbé dans une masse de base absorbante, caractérisé par le fait qu'on utilise comme insecticides des pyréthrinoïdes ou des isopyréthrinoïdes.

2. Dispositif selon la revendication 1, caractérisé par le fait qu'il est constitué par deux ou trois compositions solides disposées côte à côte.

3. Dispositif selon la revendication 1, caractérisé par le fait qu'au moins une des compositions solides contient comme substance auxiliaire inerte un diluant ou un épaississant, un parfum ou un colorant, un stabilisant ou une substance attirant les insectes ou chassant les insectes.

4. Dispositif selon la revendication 1, caractérisé par le fait qu'au moins une des compositions solides contient comme insecticide un ester de l'acide de chrysanthème, des acides 3-(2,2-butanovinyl)-2,2-diméthylcyclopropanecarboxylique, 3-(2,2-dibromovinyl)-2,2-diméthylcyclopropanecarboxylique, 3-(2,2-dichlorovinyl)-2,2-diméthylcyclopropanecarboxylique, 3-(2,2-difluorovinyl)-2,2-diméthylcyclopropanecarboxylique ou 2,2,3,3-tétraméthylcyclopropanecarboxylique, sous sa forme racémique ou dissociée.

5. Dispositif selon la revendication 1, caractérisé par le fait qu'au moins une des compositions solides contient comme insecticide un isopyréthrinoïde qui est constitué par un ester formé à partir d'un alcool utilisé pour la préparation des pyréthrinoïdes et d'un acide, sous sa forme racémique ou optiquement active, l'acide correspondant à la formule

```
        R
        |
A  -  C  -  CO  -  OH
        |
        R'
```

dans laquelle R est un reste alkyle inférieur, alcényle inférieur ou cyclopropyle, et R' est de l'hydrogène, ou bien R et R' forment ensemble un reste 1,3-propano-divalent, et A représente un noyau aromatique choisi parmi le benzène, le furanne, le thiophène et le pyrrole ou également un reste naphtyle, éventuellement substitués 1 ou 2 fois par du brome, du chlore, du fluor ou des groupes alkyle ou alcoxy ayant 1 à 4 atomes de carbone, un reste 3,3-dibromo-2-propényle ou 3,3-dichloro-2-propényle ou bien un reste alkyle ayant 1 à 10 atomes de carbone.

6. Dispositif selon la revendication 1, caractérisé par le fait que la composition contient 2 à 15 % en poids de l'insecticide.

7. Dispositif selon la revendication 1, caractérisé par le fait que sont utilisés comme masses de base absorbantes : des papiers ou des cartons cellulosiques qui sont constitués par des fibres de bois, des fibres de céréales, des fibres d'alfa des fibres de coton ou des restes de vieux papiers, des fibres d'amiante, des fibres de verre, des fibres de laine et/ou des fibres de polymères ainsi que du grès, de l'aluminium fritté et de la porcelaine poreuse.

8. Dispositif selon la revendication 1, caractérisé par le fait que la masse de base absorbante se présente sous forme d'une plaque ayant 0,1 à 6 mm d'épaisseur.

9. Dispositif selon la revendication 1, caractérisé par le fait que les compositions solides sont fixées entre elles par de l'adhésif, du ciment ou par un système à pince, à goupille, d'enceinte ou d'agrafes en métal ou en métière synthétique.

10. Dispositif selon la revendication 1, caractérisé par le fait que les compositions sont constituées par une seule masse de base absorbante dans laquelle les substances actives sont absorbées, éventuellement, en même temps qu'une substance auxiliaire inerte, à chaque fois sur des parties de la surface différentes, sont séparées les unes des autres.

11. Dispositif selon la revendication 10, caractérisé par le fait que les parties de la surface imprégnées, différentes, sont séparées par une zone exempte de substance active.

12. Dispositif selon la revendication 11, caractérisé par le fait que la zone exempte de substance active est imprégnée avec une substance qui supprime la capacité d'absorption de la masse de base.

13. Dispositif selon la revendication 12, caractérisé par le fait que la substance supprimant la capacité d'absorption de la masse de base est une cire, un silicate alcalin, une résine naturelle ou une résine de polymère synthétique.